# EUROPEAN PATENT APPLICATION

(11) **EP 0 571 028 A2**
(43) Date of publication of application: **24.11.1993**
(21) Application number: 93201379.0
(22) Date of filing: 13.05.1993
(51) Int. Cl.: H04N 3/26

(54) **Display device including a correction circuit for correcting the focussing voltage**

(30) Priority: 21.05.1992 EP 92201455
(71) Applicant: Philips Electronics N.V., 5621 BA Eindhoven (NL)
(72) Inventor: Houben, Paulus Antonius, NL-5656 AA Eindhoven (NL)
(74) Representative: Kooiman, Josephus Johannes Antonius

(57) **Abstract**

A display device comprising a display tube (3) having at least one control electrode (2) and focusing electrode means (4), a video signal processing circuit (1) for receiving, processing and applying a video signal (Vo) to the control electrode, and a correction circuit (5) for correcting a focusing voltage (F) to be applied to the focusing electrode means with the aid of a circuit (7) for generating the focusing voltage, characterized in that the correction circuit (5) comprises means for determining the variation of the luminance component of the video signal and also means for correcting, with reference to the determined variation, the focusing voltage.

## Description

The invention relates to a display device comprising a display tube having at least one control electrode and focusing electrode means, a video signal processing circuit for receiving, processing and applying a video signal to the control electrode, and a correction circuit for correcting a focusing voltage to be applied to the focusing electrode means with the aid of a circuit for generating the focusing voltage.

A display device of this type is known from United States Patent US-A-4,258,298. This known display device includes a correction circuit for correcting the focusing voltage in dependence upon the average value of the beam current of the cathode of the display tube of the display device and also in dependence upon the position of the spot (of the beam current) on the display screen of the display tube. If the focusing voltage is not adapted in dependence upon the position on the display screen, the spot on the display screen will become increasingly larger towards the edges of the display screen. Moreover, in the case of a larger beam current of the cathode (= larger brightness (luminance) on the display screen) the spot on the display screen will become larger if the focusing voltage is not adapted.

This known display device includes a correction circuit in which the focusing voltage is adapted and corrected by means of two parameters. These parameters are a slowly varying parameter, *viz*. varying with the average beam current (hence with the average luminance component of the video signal) and one parameter varying at the field and line frequency, *viz*. varying with the position of the spot (of the beam current) on the display screen.

This known correction circuit has the drawback that, in spite of the dependence upon the two above-mentioned parameters, optimum focusing is not achieved in all cases.

It is, *inter alia,* an object of the invention to provide a display device which does not have the above-mentioned drawback. To this end a display device according to the invention is characterized in that the correction circuit comprises means for determining the variation of the luminance component of the video signal and also means for correcting, with reference to the determined variation, the focusing voltage to be generated by the circuit for generating the focusing voltage.

Instead of determining the average value of the video signal for, for example a field, the differences in the video signal (variation) are now determined.

The variation of the luminance component of the video signal is understood to mean the variation of the beam current of the cathode(s) to the display screen. This variation may be measured, for example, with reference to the luminance component (Y) of the YUV signals.

Measurements of the focusing voltage have proved that the optimum value of the focusing voltage for small details (for example, letters, text) is essentially different than the optimum value at a light-dark transition (for example, two areas having different levels of brightness). Differences of approximately 100 to 150 V occurred between the two optimum focusing voltages. A correction circuit as known from the above-mentioned United States Patent, using the average value of the video signal for setting the focusing voltage, will not yield an optimum picture (focusing). Said two examples (details/two areas) may have the same average value of the video signal, while the focusing voltage as indicated above should be distinctly different for an optimum focusing. Certainly in high definition television (HDTV) and in computer monitors (CMT) the correction circuit will have to adapt the focusing voltage at each (low-frequency or high-frequency) variation of the luminance component of the video signal if the requirements imposed on these applications are to be met. By adapting the focusing voltage to variations of the beam current (brightness on the display screen, variation of the luminance component of the video signal) a focusing voltage is obtained which is optimum for the different picture contents (small details, areas, *etc*.).

An embodiment of a display device according to the invention is characterized in that the means for determining the variation comprise a differentiator which is adapted to receive the video signal and to apply a signal, related to the derivative of the video signal, as a correction signal to the circuit for generating the focusing voltage.

By applying (the luminance component of) the video signal to a differentiator, the derivative thereof is determined. The signal related to the derivative is used by the circuit for generating the focusing voltage to generate the focusing voltage which is optimum for this video signal these picture contents).

These and other aspects of the invention will be apparent from and elucidated with reference to the embodiments described hereinafter. In the drawing
Fig. 1 is a block diagram of an embodiment of a display device including a correction circuit for correcting the focusing voltage according to the invention, and
Fig. 2 shows a second embodiment of a display device including a correction circuit according to the invention.

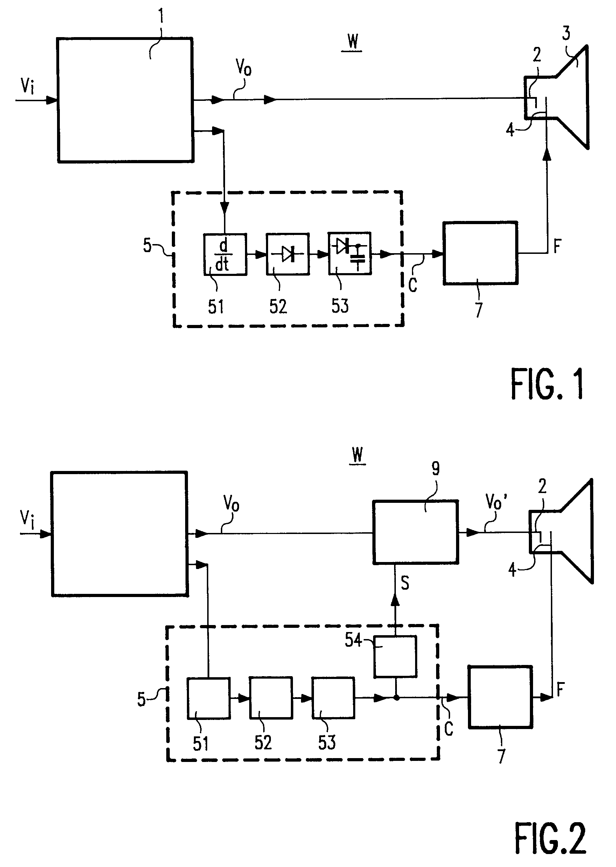

Fig. 1 is a block diagram of an embodiment of a display device W in which a video signal processing circuit 1 receives an input video signal Vi and, after having been processed in known manner to an (output) video signal Vo suitable to be applied to a control electrode, for example a cathode 2 of a display tube 3, this output video signal Vo is applied to the cathode 2.

A second output signal of the video signal processing circuit is applied to a correction circuit 5 for correcting a focusing voltage F to be applied to a focusing electrode 4 of the display tube 3. This second output signal comprises a signal which is a measure of the luminance component of the video signal. This signal may be obtained (in the case of a colour display screen) for example, from the Y component of the YUV signals received by the video signal processing circuit 1.

In this embodiment the correction circuit 5 comprises a differentiator 51 which receives the second output signal of the video signal processing circuit. The differentiator supplies the derivative of this signal at an output, and after rectification in a rectifier 52 and peak detection in a peak detector 53 a correction signal C is obtained. The correction signal C is applied to a circuit 7 for generating the focusing voltage, which circuit determines, with reference to the correction signal C, the optimum focusing voltage associated with said derivative (and hence with the relevant video signal) and supplies this optimum focusing voltage F at an output to the focusing electrode 4 of the display tube 3.

The correction circuit determines the optimum correction value at any instant of a picture line to be displayed. Any variation of the derivative of the luminance component of the video signal necessitates a variation of the focusing voltage for optimum focusing.

For example, if the picture to be displayed comprises two areas of different light intensities, this will result in a peak-shaped derivative, with the height of the peak depending on the intensity difference between the two areas and on the sharpness of the transition. (After rectification and peak detection) the height of the peak results in a DC signal (the correction signal C). Dependent on the value of the correction signal, the focusing voltage F is adapted to the transition (edge) of the two areas. Before and after the transition the focusing voltage has the optimum value associated with an even area.

If the picture to be displayed comprises many small details, this results in a peak-shaped derivative again, but now with a peak for each detail. These peaks are, however, much lower than the peak-shaped derivative for said two areas. Now this derivative again results (after rectification and peak detection) in the (DC-shaped) correction signal. The correction signal varies rapidly in this situation and is much smaller than in the above-mentioned example at the transition between the two areas and thus yields a different focusing voltage F. The rectification is necessary because the derivative is either positive or negative and because the same correction signal is to be applied to the circuit for generating the focusing voltage in both situations.

The average values of the video information of the pictures may be approximately equal in the two above-mentioned examples, while the focusing voltage should essentially differ for an optimum focusing.

If the display device includes, for example a picture memory (or a number of line memories), the variation of the derivative of the luminance component of the video signal between different lines to be displayed can be determined and the focusing voltage can be adapted thereto. For example, the correction circuit 5 may comprise video signal processing means which digitally determine the derivative of the luminance component of the video signal with reference to adjacent pixels, instead of the (analog) differentiator 51, rectifier 52 and integrator 53 shown in Fig. 1. For example, for digitally determining the derivative of the luminance component of the video signal at the position (x,y), the video signal at the positions (x-1,y), (x,y) and (x+1,y) may be used. For determining the derivative of the luminance component of the video signal at the position (x,y), the video signal may alternatively be used at the positions (x-1,y), (x,y), (x+1,y), (x,y-1), (x,y+1) and (x,y). The number of pixels used for determining the derivative may be extended in known manners. All kinds of known analog and digital video signal processing methods may be used for determining the derivative of the video signal luminance component.

The correction circuit 5 may alternatively be implemented in such a way that the correction signal comprises two components, one for the derivative of the video signal luminance component in the horizontal direction and one for the derivative of the video signal luminance component in the vertical direction.

The circuit 7 for generating the focusing voltage should also generate a position-dependent variation of the focusing voltage. This may be effected, for example by means of the known horizontal and vertical parabolas. Alternatively, the circuit for generating the focusing voltage may also comprise, for example a look-up table (controlled by synchronizing signals) for determining a necessary variation of the focusing voltage in dependence upon the position on the display screen, which focusing voltage variation is combined with the necessary variation of the focusing voltage in dependence upon the variation of the derivative of the video signal luminance component so as to obtain a focusing voltage which is optimum for both parameters.

The circuit 7 for generating the focusing voltage may also include a threshold circuit in which the focusing voltage is not corrected (not corrected for the picture contents, but corrected for the position on the display screen) if the correction signal (hence the derivative) is below a predetermined threshold and in which the focusing voltage is adapted if the correction signal is above this threshold.

If the display tube 3 has two focusing electrodes, the circuit for generating the focusing voltage will have to supply two focusing voltages, for example, a horizontal component and a vertical component. For example, in a DAF gun (dynamic automatic focus) the focusing voltage is varied in dependence upon the position on the display screen in order to obtain a focusing which is independent of the position on the display screen, which focusing voltage comprises two components, one rapidly varying horizontal component and one slowly varying vertical component and which is applied to two focusing electrodes. As described above, the correction signal C for correcting the focusing voltage due to variations of the derivative of the video signal luminance component may also comprise a horizontal and a vertical component. In the circuit for generating the focusing voltage the optimum focusing voltage (controlled by synchronizing signals) for each specific position (horizontal, vertical) and for each (variation of the) derivative of the luminance component of the video signal is generated and applied to the respective focusing electrodes of the display tube 3 with reference to this (twofold) correction signal and with reference to data stored in the look-up table.

Fig. 2 shows a second embodiment of a display device including a correction circuit for the focusing voltage. Elements having the same reference numerals as in Fig. 1 are identical. In addition to the correction signal C to be applied to the circuit 7 for generating the focusing voltage, the correction circuit 5' also supplies a control signal S at a second output in this embodiment, which control signal is applied to a video signal correction circuit 9. In this embodiment the correction circuit 5' comprises a detection circuit 54. This detection circuit receives the signal which is also applied as a correction signal C to the circuit 7 for generating the focusing voltage and which determines, with reference to this signal (which is a measure of the derivative of the video signal luminance component) whether the video signal should be corrected. The detection circuit may be, for example, a threshold circuit which supplies a control signal S having a digital value of "0" if the derivative is below a predetermined threshold and which supplies a control signal having the digital value of "1" if the derivative is above the threshold. It is alternatively possible for the detection circuit to distinguish more than two levels so that the video signal correction circuit receives a control signal S which indicates more than two situations. Dependent on the control signal, the video signal correction circuit 9 determines whether the video signal should be corrected or not, and if so, how it should be corrected. For example, the video signal may be applied to the output *via* an extra filter (forming part of the video signal correction circuit) so as to remove (extra) noise or smooth the video signal. This control signal may alternatively be used to intensify the video signal, for example, at a light-dark transition so as to obtain an improved definition.

Whether additional operations are necessary or not necessary is dependent on the determined derivative of the video signal luminance component.

Instead of the differentiator described above (forming part of the correction circuit 5) a different type of high-pass filter may be used to apply the correction signal C to the circuit 7 for generating the focusing voltage, dependent on the (low-frequency or high-frequency) variation of the video signal luminance component. A bandpass filter may also be used in the correction circuit 5, 5'. Components not associated with the video signal to be displayed, such as colour burst and synchronizing signals, may be filtered out by means of a bandpass filter so as to prevent that, due to these components, the circuit for generating the focusing voltage adapts the focusing erroneously.

To prevent the above-mentioned problems, it is alternatively possible to activate the correction circuit and/or the circuit for generating the focusing voltage only during the active line periods.

## Claims

1. A display device comprising a display tube (3) having at least one control electrode (2) and focusing electrode means (4), a video signal processing circuit (1) for receiving, processing and applying a video signal (Vo) to the control electrode, and a correction circuit (5) for correcting a focusing voltage (F) to be applied to the focusing electrode means with the aid of a circuit (7) for generating the focusing voltage, characterized in that the correction circuit (5) comprises means for determining the variation of the luminance component of the video signal and also means for correcting, with reference to the determined variation, the focusing voltage to be generated by the circuit for generating the focusing voltage.

2. A display device as claimed in Claim 1, characterized in that the means for determining the variation comprise a differentiator which is adapted to receive the video signal and to apply a signal, related to the derivative of the video signal, as a correction signal to the circuit for generating the focusing voltage.

3. A display device as claimed in Claim 2, characterized in that the differentiator is coupled to the circuit for generating the focusing voltage *via* a rectifier and a peak detector.

4. A display device as claimed in Claim 2 or 3, characterized in that the differentiator determines the variation of the video signal luminance component with reference to pixels of the video signal located on one line to be displayed.

5. A display device as claimed in Claim 2 or 3, characterized in that the differentiator determines the variation of the video signal luminance component with reference to pixels of the video signal located on different lines to be displayed.

6. A display device as claimed in Claim 1, characterized in that the correction circuit is adapted to apply a control signal to a video signal correction circuit in dependence upon the measured variation of the video signal luminance component.
